# FASCICULE DE BREVET EUROPEEN

(11) **EP 3 701 141 B1**
(45) Date de publication et mention de la délivrance du brevet: **04.12.2024**
(21) Numéro de dépôt: 18803554.7
(22) Date de dépôt: 25.10.2018
(51) Int. Cl.: F03B 13/18, F03B 13/20, B63B 22/04

(54) **DISPOSITIF HOULOMOTEUR FLOTTANT**
SCHWIMMENDE WELLENENERGIEVORRICHTUNG
FLOATING WAVE ENERGY DEVICE

(30) Priorité: 26.10.2017 FR 1771127
(43) Date de publication de la demande: 02.09.2020
(73) Titulaire: Seaturns, 33000 Bordeaux (FR)
(72) Inventeur: TOURNERIE, Vincent, 33000 Bordeaux (FR)
(74) Mandataire: Aquinov
(86) Numéro de dépôt international: PCT/EP2018/079321
(87) Numéro de publication internationale: WO 2019/081659

(56) Documents cités:
- WO-A1-2008/038055
- WO-A1-2015/144956
- US-A1- 2006 214 050
- US-A1- 2007 089 409
- US-A1- 2011 018 275

## Description

Compte tenu du réchauffement climatique, l'exploitation des énergies renouvelables est une nécessité, les énergies marines renouvelables offrent un potentiel énergétique considérable, notamment l'énergie des vagues.

Il existe des dispositifs à colonne d'eau oscillante et des dispositifs à déferlement mais l'ensemble de ces dispositifs présente plusieurs inconvénients. En effet, il apparait des problèmes de vieillissement et de dimensionnement sur les liaisons et les articulations mécaniques dans le cas de dispositifs articulés. De plus, ces dispositifs sont très volumineux et nécessitent des surdimensionnements sécuritaires.

Il existe également des dispositifs pour récupérer l'énergie de la houle. Parmi ces dispositifs, certains sont flottants et transforment les déplacements du générateur flottant, induits par la houle, en énergie. En effet, la houle engendre des mouvements verticaux de ce générateur flottant qui peuvent être convertis en énergie électrique, via des moyens de production d'énergie interne ou externe au dispositif flottant ou via des moyens d'entraînement en rotation permettant de générer du courant.

Or, la plupart des dispositifs de génération d'énergie électrique, flottants, connus, sont reliés à un ancrage positionné au fond de l'eau via une liaison directe. Suivant les conditions climatiques, les marées, les efforts relatifs à la flottaison, à la houle et aux vagues pouvant s'exercer sur le dispositif flottant, peuvent être très importants, nécessitant là encore des surdimensionnements sécuritaires.

Un exemple d'un dispositif pour récupérer l'énergie de la houle est montré dans WO 2008/038055 A1.

La présente invention propose un générateur d'énergie flottant dont le rattachement à l'ancrage peut ne pas être direct et dont la production d'énergie s'effectue grâce au mouvement de cavalement dudit dispositif sur l'eau. Plus précisément la présente invention propose un dispositif houlomoteur flottant destiné à être installé en milieu aquatique comportant une surface S, de l'eau E et un fond F, ledit dispositif étant réalisé par un cylindre 10 comportant des moyens de production d'énergie, et des moyens de liaison reliés à des ancrages, ce dispositif se caractérisant en ce que les moyens de liaison sont croisés de façon spécifique.

La présente invention est maintenant décrite suivant un mode de réalisation principal, sans que celui-ci soit limitatif, ceci en regard des dessins associés sur lesquels les différentes figures représentent :
- Figure 1 : une vue en perspective du dispositif houlomoteur dans son milieu d'installation,
- Figure 2 : une vue en perspective du dispositif houlomoteur, vu en coupe,
- Figure 3a : une vue de dessous d'une variante des moyens de liaison,
- Figure 3b : une vue de dessous d'une autre variante des moyens de liaison,
- Figure 4 : une vue en élévation du dispositif subissant le cavalement dans le sens de la propagation de la houle et une vue du positionnement dudit dispositif sur la houle,
- Figure 5 : une vue en élévation du dispositif subissant le cavalement dans le sens inverse du sens de la propagation de la houle et une vue du positionnement dudit dispositif sur la houle, et
- Figure 6 : une vue en élévation du dispositif houlomoteur, vu en coupe et muni d'ailettes.

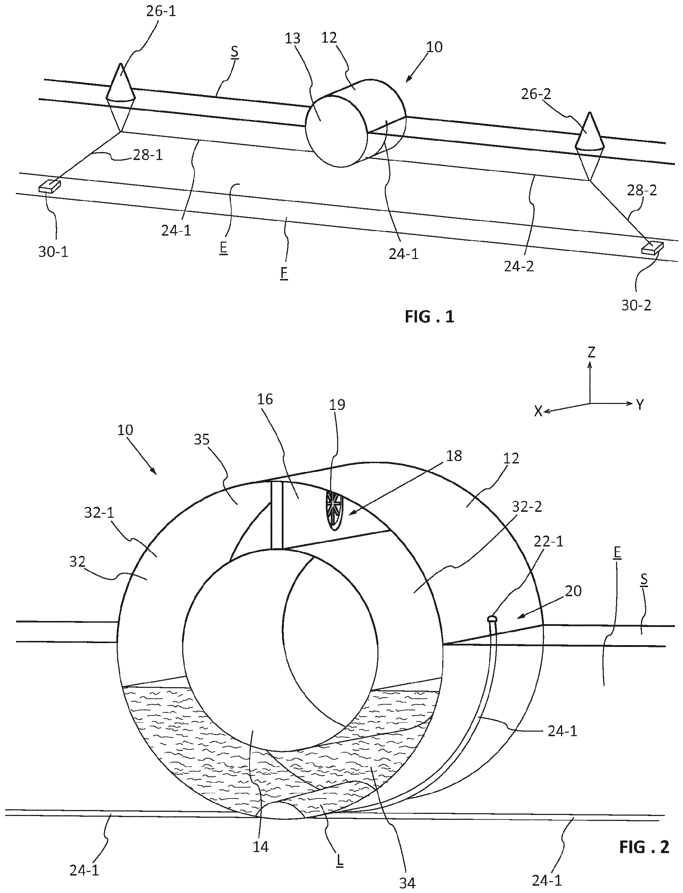

Les figures 1 à 6 illustrent le dispositif houlomoteur dans un repère orthonormé X, Z. La figure 2 est une coupe d'une vue en perspective et la figure 1 est une vue en perspective du dispositif houlomoteur placé dans un espace marin constitué d'eau E, ayant une surface S et un fond marin F.

Le dispositif selon la présente invention est mis en place de manière opérationnelle dans cet espace. Le dispositif houlomoteur comprend un cylindre 10 étendu suivant l'axe X, placé à la surface S de l'eau E et immergé d'environ la moitié de son volume.

Comme visible sur les figures 1 et 2, le cylindre 10 comporte une paroi extérieure 12 cylindrique, deux parois latérales 13 et une paroi intérieure 14 cylindrique fixée à ladite paroi extérieure 12 par au moins une cloison support 16. La au moins une cloison support 16, étendue dans le plan radiale X,Z, comporte des moyens de production d'énergie 18, en l'occurrence une génératrice de courant 19.

Le dispositif houlomoteur est également muni de moyens de liaison 20, réalisés par au moins deux attaches 22-1 et 22-2 et deux câbles supports 24-1 et 24-2. Les attaches 22-1 et 22-2 sont solidaires de la paroi extérieure 12 du cylindre 10, et sont reliées à des éléments flottants 26-1 et 26-2 via lesdits câbles supports 24-1 et 24-2.

Lesdits éléments flottants 26-1 et 26-2 sont amarrés au fond F, chacun par au moins un câble d'amarrages 28-1 et 28-2, reliant respectivement les éléments flottants 26-1 et 26-2 à des ancrages 30-1 et 30-2 placés sur le fond F.

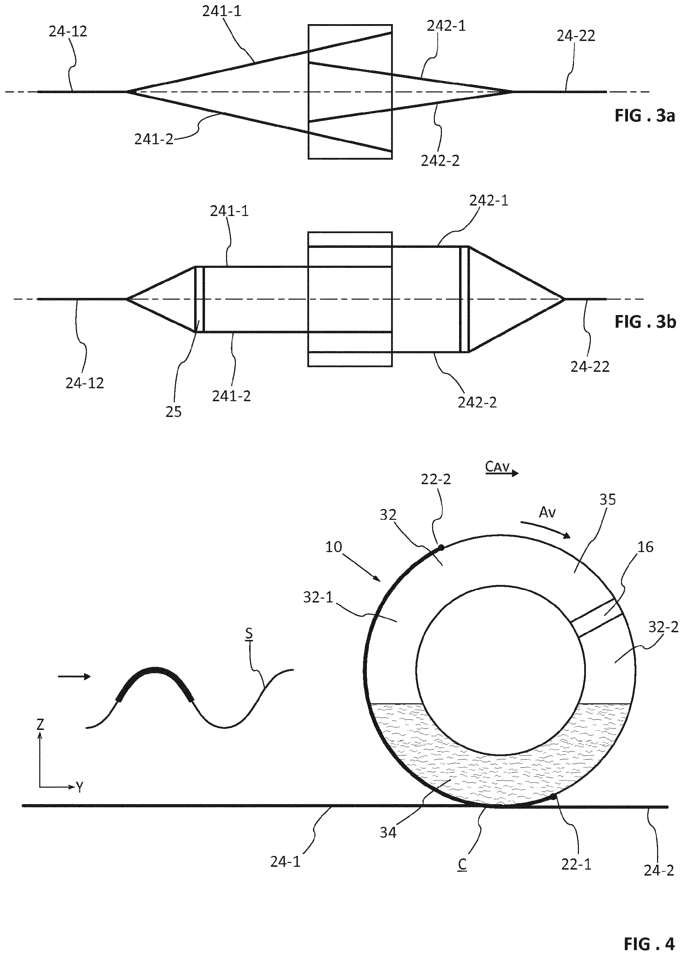

Les attaches 22-1 et 22-2 de la paroi extérieure 12 du cylindre 10 sont placées de manière symétrique par rapport à un plan horizontal et ces attaches 22-1 et 22-2 sont placées du côté opposé du cylindre par rapport aux câbles support 24-1 et 24-2. Ainsi, les câbles support 24-1 et 24-2 se croisent au niveau d'un point C, situé au plus bas du cylindre 10, suivant l'axe Z et visible sur les figures 4, 5 et 6. Lesdits câbles 24-1 et 24-2 sont également partiellement enroulés autour du cylindre 10. Ledit point C est de référence sur le cylindre.

Les deux parois extérieure 12 et intérieure 14 du cylindre 10 forment un volume annulaire intérieur 32 qui reçoit un fluide liquide 34, par exemple de l'eau et un fluide gazeux 35, en l'occurrence de l'air. En partie basse, le cylindre 10 comporte également un lest L, pouvant être placé à l'intérieur, dans le volume annulaire 32 ou à la périphérie du cylindre 10, sur l'extérieur de la paroi 12. Au sein du volume annulaire intérieur 32, deux chambres 32-1 et 32-2 sont formées entre la surface libre du fluide liquide 34 et la au moins une cloison support 16. Lesdites deux chambres 32-1 et 32-2 sont donc séparées d'une part par la cloison support 16 et d'autre part par le fluide liquide 34.

Si le cylindre 10 est représenté avec deux attaches 22-1 et 22-2 simples, placées de manière symétrique par rapport à un plan médian étendu suivant le plan X, Z passant par le centre du cylindre 10, il faut considérer que le dispositif houlomoteur est, en pratique, relié par deux paires de câbles support 241-1, 241-2 et 242-1, 242-2 issues respectivement des câbles support 24-12 et 24-22 et reliées à deux paires d'attaches, non représentées, placées à la même hauteur suivant l'axe Z de part et d'autre du cylindre 10. Les deux câbles supports 24-12 et 24-22 peuvent simplement diverger, comme représenté sur la figure 3a mais peuvent également comporter un écarteur 25, comme représenté sur la figure 3b.

Les figures 3a et 3b illustrent ce type de liaison support double.

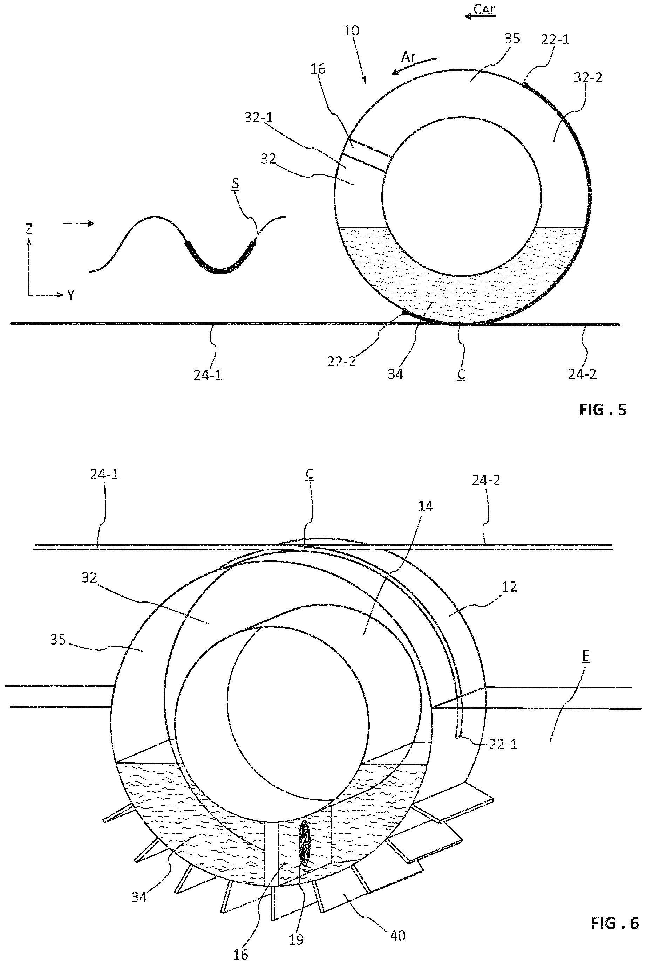

La figure 6 est une vue en perspective d'un dispositif houlomoteur similaire à celui des figures 1 et 2 mais dans lequel les moyens de production d'énergie 18, portés par la au moins une cloison support 16, sont disposés en partie basse du cylindre 10. Dans cet agencement, les câbles supports 24-1 et 24-2 se croisent en partie haute du cylindre 10. Dans cette position les câbles supports 24-1 et 24-2 sont partiellement enroulés autour du cylindre 10 et se croisent au niveau du point C situé au plus haut sur le cylindre 10, préférentiellement sur la paroi. De plus, la paroi extérieure 12 supporte également des ailettes 40, étendues de manière radiale vers l'extérieur et développées, suivant la largeur du cylindre 10. On considère la largeur du cylindre 10, comme étant la dimension la plus longue du cylindre 10, qui s'étend suivant l'axe X.

Le fonctionnement de l'invention est maintenant décrit. Le cylindre 10 est un cylindre étanche flottant. Ledit cylindre 10 est apte à contenir un fluide liquide 34, qui ne remplit que partiellement le volume annulaire intérieur 32. Le fluide liquide 34 peut alors se déplacer librement dans le volume annulaire intérieur 32. Lorsque le cylindre 10 est mis en place, c'est-à-dire, qu'il flotte à la surface S de l'eau E, ledit cylindre 10 est équilibré verticalement par le lest L, le fluide liquide 34 est positionné en partie basse dudit cylindre 10 du fait de la gravité. Parallèlement, les câbles support 24-1 et 24-2 relient le cylindre 10 aux éléments flottants 26-1 et 26-2, pouvant être des bouées. Lesdits éléments flottants 26-1 et 26-2 sont rattachés, aux ancrages 30-1 et 30-2. Lesdits ancrages 30-1 et 30-2 ont un positionnement fixe sur le fond marin F et sont reliés aux éléments flottants 26-1 et 26-2 par les câbles d'amarrage 28-1 et 28-2. Si la description stipule un unique câble d'amarrage 28-1 et 28-2 pour le maintien en position des éléments flottants 26-1 et 26-2, lesdits éléments flottants 26-1 et 26-2 peuvent être fixés à plusieurs ancrages par plusieurs câbles d'amarrage afin d'obtenir un positionnement plus précis des éléments flottants 26-1 et 26-2 et donc du cylindre 10. Aussi, le cylindre 10 peut être directement rattaché aux ancrages 30-1 et 30-2 mais ledit cylindre 10 et les ancrages 30-1 et 30-2 subiront directement les efforts de tension. Les efforts subis par le cylindre 10 peuvent être importants et obligent à dimensionner de manière importante les ancrages 30-1, 30-2 ainsi que les câbles supports 24-1 et 24-2. Il est donc privilégié l'usage des éléments flottants 26-1 et 26-2 pour éviter une tension directe.

En effet, les éléments flottants 26-1 et 26-2 permettent de positionner les câbles support 24-1 et 24-2 à l'horizontal. Les éléments flottants 26-1 et 26-2 permettent ainsi une optimisation des dimensionnements de conception et permettent une meilleure durabilité du dispositif houlomoteur, conçu pour subir annuellement des millions de cycles.

On considère que les mouvements de houles subis se propagent suivant l'axe Y du repère orthonormé. Ces mouvements de houle ainsi que le positionnement induit du cylindre 10 sont représentés sur les figures 4 et 5. Les figures 4 et 5 représentent uniquement les éléments formant le cylindre 10 et les câbles support 24-1 et 24-2. Les éléments flottants 26-1 et 26-2 et les ancrages 30-1 et 30-2 ne sont pas représentés sur ces figures 4 et 5. Le cylindre 10 est étendu suivant l'axe X et donc perpendiculairement au sens de propagation de la houle. Lorsque le dispositif houlomoteur subit les mouvements de la houle, le dispositif houlomoteur subit deux mouvements distincts, bien souvent simultanés. Le premier mouvement subi est un mouvement de pilonnement, qui s'apparente à la variation de hauteur subie, suivant l'axe Z. Le deuxième mouvement est un mouvement de cavalement, qui s'apparente à un mouvement d'avancement, suivant l'axe Y.

Pour la description des figures 4 et 5, on considère que la houle se propage de la gauche vers la droite, suivant l'axe Y, perpendiculairement à la largeur du cylindre 10 et que la partie en surépaisseur de la houle montre le positionnement du cylindre 10 à la surface de l'eau S. Lorsque ledit cylindre 10 subit le mouvement de cavalement dû à la propagation de la houle, il se déplace suivant un axe horizontal. En effet, comme représenté sur la figure 4, le mouvement de cavalement Cav est subi par le cylindre 10 lorsque ledit cylindre 10 flotte sur la demi hauteur supérieure de la houle, définie en surépaisseur, en passant par la crête de la houle. Or, le déplacement du cylindre 10 est limité par le câble 24-1 qui est relié à l'attache 22-1, placée sur la paroi extérieure du cylindre 10. Le câble support 24-1 retient alors le cylindre 10 par l'intermédiaire dudit point d'attache 22-1. Or si le point d'attache 22-1 du cylindre 10 est retenu et que le cylindre 10 continue de subir le mouvement de cavalement Cav dû à la houle, ledit cylindre 10 subit alors une rotation autour de l'axe X. Ainsi ledit câble 24-1 se tend et se déroule et simultanément le câble 24-2 s'enroule autour du cylindre 10. Le mouvement de la houle subi par le cylindre 10 engendre donc une rotation dans le sens avant Av dudit cylindre 10 suivant l'axe X.

La figure 5 représente le mouvement de cavalement Car qui est subi par le cylindre 10 lorsque le cylindre 10 flotte sur la demi hauteur inférieure de la houle, en passant par le creux de la houle.

Or, dans ce sens, le déplacement du cylindre 10 est limité par le câble 24-2 qui est relié à l'attache 22-2, placé sur la paroi extérieure du cylindre 10. Le câble support 24-1 retient alors le cylindre 10 par l'intermédiaire dudit point d'attache 22-2. Or, si le point d'attache 22-2 du cylindre 10 est retenu et que le cylindre 10 continue de subir le mouvement de cavalement Car dû à la houle, ledit cylindre 10 subi alors une rotation autour de l'axe X. Ainsi ledit câble 24-2 se tend et se déroule et simultanément le câble 24-1 s'enroule autour du cylindre 10. Le mouvement de la houle subi par le cylindre 10 engendre donc une rotation dans le sens arrière Ar, dudit cylindre 10 suivant l'axe X.

Lorsque le cylindre 10 subit les rotations précédemment décrites, le fluide liquide 34 reste en partie basse du cylindre 10, mais la cloison support 16 solidaire des parois intérieure 10 et extérieure 12 formant le cylindre 10, passe d'une position verticale, visible sur la figure 1, à une position inclinée, visible sur les figures 4 et 5. Ainsi, la cloison support 16 qui supporte la génératrice de courant 19, se rapproche du fluide liquide 34 d'un côté et s'éloigne du fluide de l'autre côté. Le rapprochement de la cloison support 16 comportant la génératrice de courant 19 vers le fluide liquide 34 engendre une compression du fluide gazeux 35 et l'éloignement de la cloison support 16 vers le fluide liquide 34 engendre une dépression du fluide gazeux 35. Plus précisément, lorsque la rotation s'effectue dans le sens Av, comme sur la figure 4, la chambre 32-2 est comprimée et la chambre 32-1 est décompressée et lorsque la rotation s'effectue dans le sens Ar, la chambre 32-2 est décompressée et la chambre 32-1. Les compressions et les décompressions, engendrées par le cavalement et donc la rotation du cylindre 10, induisent alors une circulation du fluide gazeux 35 par l'unique passage possible pour ledit fluide gazeux 35. L'unique passage étant formé par l'ouverture portant la génératrice de courant 19, la génératrice de courant 19 est alors entraînée par la circulation du fluide gazeux 35 et produit de l'électricité.

La production d'énergie s'effectue donc dans les deux sens de cavalement Cav et Car et donc dans les deux sens de rotation Av et Ar.

Dans le cas représenté par la figure 6, des palettes 40 sont ajoutées à l'extérieur du cylindre et sont fixées de manière radiale à la paroi extérieure 12 du cylindre 10. Les palettes ont pour rôle d'augmenter l'effet de cavalement subi en limitant le glissement, et peuvent également jouer le rôle du lest L précédemment décrit. Lesdites palettes 40 sont placées en partie basse du cylindre 10 alors que les câbles supports 24-1 et 24-2 sont positionnés en partie haute du cylindre 10, le positionnement des câbles supports 24-1 et 24-2 en partie haute et les palettes 40 peuvent bien sûr être utilisés de manière indépendante. La figure 6 stipule également une autre solution pouvant être adoptée, à savoir le positionnement de la cloison support 16 qui supporte la génératrice de courant 19 placée en partie inférieure.

Le dispositif houlomoteur ne fonctionne alors plus par une compression du fluide gazeux 35 mais par un déplacement du fluide liquide 34 comme une hydrolienne interne. En effet, la génératrice de courant 19 est placée directement dans le fluide liquide 34, en partie basse du volume annulaire intérieur 32, ce qui génère un mouvement relatif de ladite génératrice par rapport au fluide liquide 34. La génératrice 19 est donc directement entraînée par les mouvements de la paroi 16 dans le fluide liquide 34.

Dans le dispositif houlomoteur représenté sur la figure 1, il est également possible de coupler plusieurs cloisons supports 16, par exemple une cloison support 16 d'une génératrice 19 tel que représenté sur la figure 1 mais en y ajoutant une cloison support 19 supplémentaire, immergée dans le fluide liquide 34 tel que représenté sur la figure 6. Un tel dispositif permet alors de combiner l'effet de mise en surpression et l'effet d'immersion du dispositif décrit sur la figure 6. Plusieurs cloisons supports 16 peuvent également être placées dans la chambre 32 et immergées dans le fluide liquide 34 afin de multiplier la production d'énergie électrique. Pour amortir les mouvements de tension transmis aux éléments flottant 26-1 et 26-2 et aux ancrages 30-1 et 30-2, les câbles supports 24-1 et 24-2 peuvent être équipés d'élément de freinage, positionnées dans le plan X, Z et fixés de manière orthogonale aux câbles supports 24-1 et 24-2, à l'image notamment des ancres flottantes.

## Revendications

1. Dispositif houlomoteur flottant destiné à être installé en milieu aquatique comportant une surface S, de l'eau E et un fond F, réalisé par un cylindre (10) comportant des moyens de production d'énergie (18), et des moyens de liaison (20) reliés à des ancrages (30-1; 30-2), les moyens de liaison (20) comportent des attaches (22-1 ; 22-2) solidaires du cylindre (10) et deux câbles support (24-1 ; 24-2) reliant lesdites attache aux ancrages (30-1 ; 30-2) et sont croisés en un point C situé au plus bas sous ledit cylindre (10) ou au plus haut sur ledit cylindre (10).

2. Dispositif houlomoteur selon la revendication 1, **caractérisé en ce que** les moyens de liaison (20) sont réalisés par les attaches (22-1; 22-2) solidaires du cylindre (10), par les câbles supports (24-1; 24-2) reliés à des éléments flottants (26-1; 26-2) amarrés aux ancrages (30-1; 30-2) par des câbles d'amarrage (28-1; 28-2).

3. Dispositif houlomoteur selon la revendication 1 ou 2, **caractérisé en ce que** le cylindre (10) comporte un volume annulaire intérieur (32) contenant un fluide liquide (34) et un fluide gazeux (35), des moyens de production d'énergie (18), des moyens de liaison (20), les moyens de production d'énergie (18) étant placés dans le volume annulaire intérieur (32).

4. Dispositif houlomoteur selon la revendication **caractérisé en ce que** en ce les moyens de production d'énergie (18) sont placés dans le fluide gazeux (35) et/ou dans le fluide liquide (34).

5. Dispositif houlomoteur selon l'une quelconque des revendications précédentes, **caractérisé en ce que en ce que** les moyens de production d'énergie (18) comprennent au moins une génératrice de courant (19).

6. Dispositif houlomoteur selon la revendication 5, **caractérisé en ce que** le générateur de courant (19) est placé dans une cloison support (16).

7. Dispositif houlomoteur selon l'une quelconque des revendications précédentes, **caractérisé en ce que** les moyens de liaison (20) sont réalisés par deux paires de câbles supports (241-1; 241-2; 242-1; 242-2) issues respectivement des câbles de liaison (24-12; 24-22).

8. Dispositif houlomoteur selon l'une quelconque des revendications précédentes, **caractérisé en ce que** le cylindre (10) comporte un lest L.

## Patentansprüche

1. Schwimmende Wellenkraftvorrichtung, die dafür bestimmt ist, in einer Wasserumgebung, die eine Oberfläche S, Wasser E und einen Grund F umfasst, installiert zu werden, die durch einen Zylinder (10), der Energieerzeugungsmittel (18) und mit Ankern (30-1; 30-2) verbundene Verbindungsmittel (20) umfasst, wobei die Verbindungsmittel (20) Befestigungen (22-1; 22-2) umfassen, die mit dem Zylinder (10) und zwei Trägerkabeln (24-1; 24-2) fest verbunden sind, die die Befestigungen mit den Ankern (30-1; 30-2) verbinden und an einem Punkt C, der am niedrigsten unter dem Zylinder (10) oder am höchsten auf dem Zylinder (10) gelegen ist, gekreuzt sind.

2. Wellenkraftvorrichtung nach Anspruch 1, **dadurch gekennzeichnet, dass** die Verbindungsmittel (20) durch Befestigungen (22-1; 22-2), die mit dem Zylinder (10) fest verbunden sind, durch Trägerkabel (24-1; 24-2), die mit schwimmenden Elementen (26-1; 26-2) verbunden sind, die durch Festmacher (28-1; 28-2) an den Ankern (30-1; 30-2) festgemacht sind, umgesetzt sind.

3. Wellenkraftvorrichtung nach Anspruch 1 oder 2,
**dadurch gekennzeichnet, dass** der Zylinder (10) ein inneres ringförmiges Volumen (32), das ein flüssiges Fluid (34) und ein gasförmiges Fluid (35) enthält, Energieerzeugungsmittel (18), Verbindungsmittel (20) umfasst, wobei die Energieerzeugungsmittel (18) in dem inneren ringförmigen Volumen (32) platziert sind.

4. Wellenkraftvorrichtung nach Anspruch 3,
**dadurch gekennzeichnet, dass** die Energieerzeugungsmittel (18) in dem gasförmigen Fluid (35) und/oder in dem flüssigen Fluid (34) platziert sind.

5. Wellenkraftvorrichtung nach einem der vorstehenden Ansprüche, **dadurch gekennzeichnet, dass** die Energieerzeugungsmittel (18) mindestens einen Stromgenerator (19) aufweisen.

6. Wellenkraftvorrichtung nach Anspruch 5, **dadurch gekennzeichnet, dass** der Stromgenerator (19) in einer Trägerwand (16) platziert ist.

7. Wellenkraftvorrichtung nach einem der vorstehenden Ansprüche, **dadurch gekennzeichnet, dass** die Verbindungsmittel (20) aus zwei Paaren von Trägerkabeln (241-1; 241-2; 242-1; 242-2) umgesetzt sind, die jeweils aus Verbindungskabeln (24-12; 24-22) hervorgehen.

8. Wellenkraftvorrichtung nach einem der vorstehenden Ansprüche, **dadurch gekennzeichnet, dass** der Zylinder (10) einen Ballast L umfasst.

## Claims

1. A floating wave energy device intended to be installed in an aquatic environment comprising a surface S, water E and a bed E, realized by a cylinder (10) comprising energy-production means (18), and connecting means (20) connected to anchors (30-1; 30-2), the connecting means (20) comprise fasteners (22-1; 22-2) secured to the cylinder (10) and two support cables (24-1; 24-2) connecting said fasteners to the anchors (30-1; 30-2) and intersect at a point C located at the bottom of said cylinder (10) or at the top of said cylinder (10).

2. The wave energy device according to claim 1, **characterized in that** the connecting means (20) are realized by fasteners (22-1; 22-2) secured to the cylinder (10) and by support cables (24-1; 24-2) connected to floating elements (26-1; 26-2) moored to the anchors (30-1; 30-2) by mooring cables (28-1; 28-2).

3. The wave energy device according to claim 1 or 2, **characterized in that** the cylinder (10) has an inner annular volume (32) containing a liquid fluid (34) and a gaseous fluid (35), energy-production means (18) and connecting means (20), the energy-production means (18) being placed in the inner annular volume (32).

4. The wave energy device according to claim 3, **characterized in that** the energy-production means (18) are placed in the gaseous fluid (35) and/or in the liquid fluid (34).

5. The wave energy device according to any of the preceding claims, **characterized in that** the energy-production means (18) comprise at least one current generator (19).

6. The wave energy device according to claim 5, **characterized in that** the current generator (19) is placed in a support partition (16).

7. The wave energy device according to any of the preceding claims, **characterized in that** the connecting means (20) are realized by two pairs of support cables (241-1; 241-2; 242-1; 242-2) which originate respectively from the connecting cables (24-12; 24-22).

8. The wave energy device according to any of the preceding claims, **characterized in that** the cylinder (10) comprises a ballast L.
